Europäisches Patentamt

European Patent Office

Office européen des brevets

(11) Veröffentlichungsnummer: **0 278 330 B1**

(12) **EUROPÄISCHE PATENTSCHRIFT**

(45) Veröffentlichungstag der Patentschrift: **18.12.91**

(51) Int. Cl.⁵: **B23K 35/38**, B23K 26/14

(21) Anmeldenummer: **88101200.9**

(22) Anmeldetag: **27.01.88**

(54) **Verfahren zum Bearbeiten von Werkstücken mit Laserstrahlung.**

(30) Priorität: **28.01.87 DE 3702451**

(43) Veröffentlichungstag der Anmeldung:
**17.08.88 Patentblatt 88/33**

(45) Bekanntmachung des Hinweises auf die
Patenterteilung:
**18.12.91 Patentblatt 91/51**

(84) Benannte Vertragsstaaten:
**AT ES FR NL**

(56) Entgegenhaltungen:
**GB-A- 1 460 140**
**US-A- 3 939 323**

**PATENT ABSTRACTS OF JAPAN, Band 10,
Nr. 336 (M-535)[2392], 14. November 1986; &
JP-A-61 140 396 (FUJIKURA LTD) 27-06-1986**

**WELDING JOURNAL, Band 56, Nr. 1, Januar
1977, Seiten 1S-7S; C.D. LUNDIN et al.: "The
effect of shielding gas additions on the penetration characteristics of plasma-arc
welds"**

(73) Patentinhaber: **FRAUNHOFER-GESELLSCHAFT
ZUR FÖRDERUNG DER ANGEWANDTEN FOR-
SCHUNG E.V.
Leonrodstrasse 54
W-8000 München 19(DE)**

Patentinhaber: **Linde Aktiengesellschaft
Abraham-Lincoln-Strasse 21
W-6200 Wiesbaden(DE)**

(72) Erfinder: **Beyer, Eckhard
Maarweg 17
W-5100 Aachen(DE)**
Erfinder: **Herziger, Gerd
Lensbachstrasse 40a
W-5106 Rötgen-Rott(DE)**
Erfinder: **Danzer, Wolfgang
Mooswiesenring 48
W-8067 Petershausen(DE)**

## Beschreibung

Die Erfindung bezieht sich auf ein Verfahren zum Bearbeiten von insbesondere metallenen Werkstücken mit plasmabildender Laserstrahlung, bei dem ein plasmabeeinflussendes Gasgemisch verwendet wird, das elektronegatives Gas und einen größeren Anteil von Argon oder dergleichen Füllgas aufweist.

Beim Laserschweißen wird das Werkstück lokal auf Verdampfungstemperatur gebracht. Sobald Dampf des Werkstücks vorliegt, kann sich ein laserinduziertes Plasma ausbilden. Das Plasma bewirkt eine Umwandlung der eingestrahlten Laserenergie in Wärmeenergie. Diese Wärmeenergie wird in das Werkstück eingekoppelt, so daß die Energieübertragung zwischen Laserstrahlung und Werkstück also über die Kette: Laserstrahlung-Plasma-Werkstück erfolgt.

Die Absorption der Strahlungsenergie durch das Plasma kann in Abhängigkeit von der Laserintensität und der Dichte des Dampfes des Werkstoffs zu einer derart starken Aufheizung des Plasmas führen, daß das Plasma beginnt, das Werkstück gegen einfallende Laserstrahlung abzuschirmen. Die Abschirmung erfolgt dadurch, daß sich das Plasma von der Werkstückoberfläche ablöst. Die abschirmende Wirkung des Plasmas kann so groß sein, daß die auf das Werkstück noch durchdringende Strahlung nicht ausreicht, um den Verdampfungsprozeß aufrecht zu erhalten, wodurch die Verdampfungs- bzw. Schmelztiefe im Werkstück verringert wird und schließlich die Werkstückbearbeitung zum Erliegen kommt.

Um die vorbeschriebenen unerwünschten Erscheinungen positiv zu beeinflussen, ist es aus der US-A-3 939 323 bekannt, das Plasma mit Helium zu beeinflussen. Das Helium steigert die Rekombination von Ionen und Elektronen, so daß die Elektronendichte im Plasma verringert wird. Da jedoch die Einkopplung von Strahlungsenergie in das Plasma in erster Linie über die Elektronen erfolgt, die infolge ihrer geringen Masse von der Laserstrahlung sehr viel leichter zu beschleunigen sind, wird mit der Verringerung von Elektronen im Plasma auch die Energieeinkopplung in das Plasma und damit dessen strahlungsabschirmende Wirkung verringert. Aus der vorgenannten Druckschrift ist es auch bekannt, Helium und ein fluoriertes Gas zu verwenden, um eine höhere thermische Leitfähigkeit als mit Helium alleine zu erreichen. Helium und Heliummischungen sind jedoch teuer, so daß ihr Einsatz von Vorteil größerer Energieeinkopplung und damit größerer Bearbeitungsgeschwindigkeit aufheben kann. Aus der oben genannten Druckschrift ist es im Sinne des eingangs genannten Verfahrens auch bekannt, einen überwiegenden Anteil von Argon mit einem entsprechend kleineren Anteil Sauerstoff, Stickstoff oder Luft zu verwenden. Ein derartiges Gemisch von Argon und Sauerstoff, als elektronegativem Gas, hat aber gemäß der oben genannten Druckschrift erheblich schlechtere Ergebnisse, als Helium oder ein Heliumgemisch.

Aus der JP-A-61-140396 ist ein Laserschweißverfahren bekannt, bei dem Schwefelhexafluorid gemeinsam mit dem auf das Werkstück fokussierten Laserstrahl durch eine Düse auf die Bearbeitungsstelle geblasen wird. Dort entsteht $SiF_4$-Gas und ähnliche Gase, die nicht mehr in die Schmelze eingebunden werden, wodurch das Bearbeiten größerer Werkstückdicken erleichtert wird. Die fluorierten Gase werden also benötigt, um mit Bestandteilen des Werkstoffs des Werkstücks zu reagieren. Die fluorierten Gase sind vergleichsweise teuer und ihre Anwendung zur Beeinflussung von Plasma ist nicht beschrieben.

Aus WELDING JOURNAL, Band 56, Nr. 1, Januar 1977, Seiten 1S-7S ist ein Plasmabogenschweißen bekannt, bei dem also zwischen einer Elektrode und dem Werkstück ein Lichtbogen betrieben wird. Dieser ist kontinuierlich gesteuert. Die darin ablaufenden Vorgänge sind nicht mit denjenigen vergleichbar, die sich beim Plasmabilden mit Laserstrahlung abspielen. Das ergibt sich aus Ausführungen dieser Druckschrift, wonach der Mechanismus der Wirkung negativer Ionen im Lichtbogen nicht genau bestimmt werden konnte, und daß die Wirkung der verschiedenen Schutzgaszusätze in Beziehung zu einer komplexen Interaktion des Anodenspannungsfalls, der Schmelzenspannung und einem weiteren Effekt in Beziehung gesetzt werden muß.

Der Erfindung liegt die Aufgabe zugrunde, ein Verfahren der eingangs genannten Art so zu verbessern, daß der Einsatz des vergleichsweise teuren Schutzgases Helium vermieden werden kann.

Diese Aufgabe wird dadurch gelöst, daß das Argon und/oder Kohlendioxyd als Füllgas zusammen mit Tetrafluorkohlenstoff und/oder Schwefelhexafluorid verwendet wird bzw. werden.

Derartige elektronegative Gase haben eine große Affinität zu Elektronen, verringern also deren Zahl im Plasma. Das geschieht durch Anlagerung freier Elektronen an die elektronegativen Atome bzw. Moleküle. Da stark elektronegative Gase verwendet werden, kann die Zahl der freien Elektronen entsprechend beträchtlich verringert werden. Daraus folgt ein großer Beeinflussungsbereich durch das elektronegative Gas. Dieses Gas vermeidet also eine abschirmende Wirkung des Plasmas auch dann, wenn mit vergleichsweise starker Metalldampfbildung gearbeitet wird, daß heißt mit vergleichsweise großer Laserleistung und/oder Laserstrahlintensität.

Mit Hilfe des Füllgases wird die Wirkung des Gasstroms verringert, welcher der Wechselwirkungszone der Laserstrahlung mit dem Werkstück zugeleitet wird. Die Gasmischung gestattet, den Beeinflussungsbereich des elektronegativen Gases zu beschränken. Das ist beispielsweise dann erforderlich, wenn starkelektronegatives Gas aus preislichen Gründen verwendet werden soll, ohne Beimischung von Füllgas wegen übermäßig starker Wirkung jedoch nicht verwendbar wäre. Als Inert- und Füllgas kommen vorzugsweise Argon und Kohlendioxid infrage.

Vorteilhafterweise wird bzw. werden als plasmabeeinflussendes Gas $CF_4$ und/oder $SF_6$ verwendet. Diese Gase sind großtechnisch herstellbar, damit preiswert und auch mit anderen Gasen mischbar. Sie haben darüberhinaus den Vorteil, gut und gefahrlos handhabbar zu sein, weil sie keine elektronegativen Gase sind. Sie bilden jedoch diese Gase im Plasma, wo sie wegen der hohen Temperaturen unter anderem zu Fluor-Radikalen zerfallen, die stark elektronegativ bzw. Elektronen anziehend wirken. Die Aktivierung elektronegativer Gase dort, wo ihre gewünschten Eigenschaften gebraucht werden, also im Plasma über dem Werkstück, ist ein weiterer Vorteil der genannten Gase, weil Reaktionen außerhalb des Plasmas nicht möglich sind.

$CF_4$ und/oder $SF_6$ wird zu weniger als 25% des gesamten Gasgemisches verwendet, um eine zu starke Wirkung zu vermeiden, nämlich das Ausblasen des Plasmas.

Das erfindungsgemäße Verfahren erfolgt vorzugsweise beim Bearbeiten von Aluminium oder Aluminiumlegierungen. Dieser Werkstoff ist hinsichtlich seiner Schwellintensität zur Abschirmung des Plasmas besonders kritisch, so daß dessen Beeinflussung durch elektronegatives Gas besondere Bedeutung beikommt.

Die Erfindung wird anhand eines in der Zeichnung dargestellten Ausführungsbeispiels einer Vorrichtung näher erläutert. Es zeigt:

Fig.1    eine schematische Darstellung einer Schweißvorrichtung und

Fig. 2    ein Diagramm zur Erläuterung der Wirkung elektronegativen Gases auf Schwellintensitäten zur Plasmaausbildung und Abschirmung, für Aluminium.

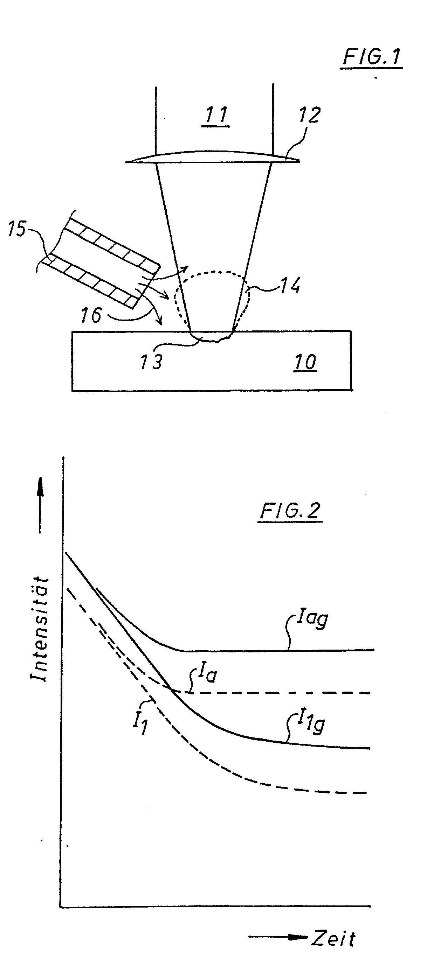

Fig. 1 zeigt ein Werkstück 10, auf das Laserstrahlung 11 gerichtet ist. Eine Laseroptik 12 bewirkt eine Fokussierung der Laserstrahlung 11 zur Definition einer Bearbeitungsgeometrie bzw. eines Bearbeitungsbereichs 13. Die Bearbeitung erfolgt beispielsweise als Schweißen oder Schneiden des Werkstücks 10, das beispielsweise aus Metall besteht, z. B. Aluminium.

Die gebündelte Laserstrahlung 11 erhitzt das Werkstück 10 im Bearbeitungsbereich 13 derart stark, daß Metall verdampft und abströmt. Es bildet sich ein laserinduziertes Plasma 14 aus, dessen freie Elektronen die Umwandlung der eingestrahlten Laserenergie in Wärmeenergie in erheblichen Maße steigern. Damit die Energieeinkopplung nicht so stark wird, daß das Plasma 14 eine den Bearbeitungsbereich 13 abschirmende Wirkung erreicht, ist eine Düse 15 vorhanden, durch welche ein Gasstrom 16 dem Plasma 14 zugeleitet wird. Der Gasstrom 16 und das Plasma 14 durchmischen sich, wobei die freien Elektronen des Plasmas an die elektronegativen Atome bzw. Moleküle des Gasstroms 16 angelagert werden, so daß eine unzulässig hohe Energieeinkopplung in das Plasma vermieden werden kann.

Im Diagramm der Fig. 2 ist der Verlauf der Intensität I der Laserstrahlung in Abhängigkeit von der Bestrahlungszeit dargestellt. Die gestrichelt dargestellten Kurven stellen herkömmliche Verläufe von Schwellintensitäten der Laserstrahlung bei Bearbeitung von Aluminium mit einem Fokusradius rF von 100 $\mu$m und einer Wellenlänge der Laserstrahlung von $\lambda$ = 10,6 $\mu$m dar, also ohne die Verwendung von Schutzgas. Die mit ausgezogenen Linien dargestellten Kurven gelten für dieselben Verhältnisse, jedoch bei der Verwendung von elektronegativem Gas. Dementsprechend ist $I_1$ die Schwellintensität zur Plasmaausbildung bei einem Absorptionsgrad von 1, also bei anomaler Absorption, im Vergleich zu der die bei der Verwendung von elektronegativem Gas maßgebliche Kurve $I_{1g}$ entsprechend höher liegt. Ia ist die Kurve für die Abschirmung des Werkstücks durch das Plasma ohne Verwendung von Schutzgas und Iag ist die entsprechende Kurve bei der Anwendung eines elektronegativen Gases.

Aus dem Vergleich der Kurven $I_1$ und $I_{1g}$ einerseits und Ia sowie Iag andererseits ist deutlich zu ersehen, daß die Schwellintensitäten durch Anwendung elektronegativen Gases zu höheren Werten hin verschoben werden. Da der Bereich zwischen Ia und $I_1$ bzw. Iag und $I_{1g}$ der Bereich für die Einkopplung der Energie der Laserstrahlung in das Werkstück ist, kann abgeleitet werden, daß die Energieeinkopplung bei der Anwendung elektronegativen Gases mit höheren Intensitäten erfolgen kann, als ohne die Anwendung eines solchen Gases. Dementsprechend wirksamer kann auch die Bearbeitung des Werkstücks sein. Der betreffende Schneidvorgang ist beispielsweise schneller möglich bzw. bei einem Schweißvorgang sind größere Schweißtiefen oder Geschwindigkeiten zu erreichen.

**Patentansprüche**

1.    Verfahren zum Bearbeiten von insbesondere metallenen Werkstücken mit plasmabildender Laserstrahlung, bei dem ein plasmabeeinflussendes Gasgemisch verwendet wird, das elektronegatives Gas und einen größeren Anteil von Argon oder dergleichen Füllgas aufweist, **dadurch gekennzeichnet,** daß das Argon (AR) und/oder Kohlendioxyd ($CO_2$) als Füllgas mit Tetrafluorkohlenstoff ($CF_4$) und/oder Schwefelhexafluorid ($SF_6$) verwendet wird bzw. werden.

2. Verfahren nach Anspruch 1, **dadurch gekennzeichnet,** daß Tetrafluorkohlenstoff ($CF_4$) und/oder Schwefelhexafluorid ($SF_6$) zu weniger als 25% des gesamten Gasgemischs verwendet wird bzw. werden.

## Claims

1. Process for machining more particularly metal workpieces with plasma-forming laser beams, in which use is made of plasma-influencing gaseous mixture, having an electronegative gas and a larger proportion of argon or a similar filler gas, characterized in that the argon (AR) and/or carbon dioxide ($CO_2$) as the filler gas is used with carbon tetrafluoride ($CF_4$) and/or sulphur hexafluoride ($SF_6$).

2. Process according to claim 1, characterized in that the carbon tetrafluoride ($CF_4$) and/or sulphur hexafluoride ($SF_6$) represents less than 25% of the total gaseous mixture.

## Revendications

1. Procédé pour traiter des pièces à usiner en particulier métalliques au moyen d'un faisceau laser générateur de plasma dans lequel un mélange de gaz est utilisé qui agit sur le plasma, ledit mélange comprenant un gaz électronégatif et une fraction considérable d'argon ou un gaz similaire de remplissage, **caractérisé** en ce que l'argon (AR) et/ou dioxyde de carbone ($CO_2$) est ou sont utilisés en tant que gaz de remplissage avec tétrahydrocarbure fluoré ($CF_4$) et/ou hexafluorure du soufre ($SF_6$).

2. Procédé selon la revendication 1, **caractérisé** en ce que le tétrahydrocarbure fluoré ($CF_4$) et/ou le hexafluorure du soufre ($SF_6$) est ou sont utilisés à une fraction correspondant à moins de 25% du mélange de gaz total.

FIG.1

FIG.2